# EUROPÄISCHE PATENTSCHRIFT

(11) **EP 2 504 538 B1**
(45) Veröffentlichungstag und Bekanntmachung des Hinweises auf die Patenterteilung: **28.03.2018**
(21) Anmeldenummer: 10766002.9
(22) Anmeldetag: 04.10.2010
(51) Int. Cl.: F01N 3/20

(54) **MODULKONZEPT FÜR DIE KOMPONENTEN EINES TANKS ZUR BEVORRATUNG EINES REDUKTIONSMITTELS**
MODULE DESIGN FOR THE COMPONENTS OF A TANK FOR STORING A REDUCING AGENT
CONCEPT DE MODULE POUR LES COMPOSANTS D'UN RÉSERVOIR POUR L'ALIMENTATION D'UN AGENT DE RÉDUCTION

(30) Priorität: 23.11.2009 DE 102009046954
(43) Veröffentlichungstag der Anmeldung: 03.10.2012
(73) Patentinhaber: Robert Bosch GmbH, 70442 Stuttgart (DE)
(72) Erfinder: HERWIG, Roland, 74354 Besigheim (DE); HAEBERER, Rainer, 75015 Bretten (DE); SEMET, Jan, 73553 Alfdorf-Vordersteinenberg (DE)
(86) Internationale Anmeldenummer: PCT/EP2010/064701
(87) Internationale Veröffentlichungsnummer: WO 2011/060993

(56) Entgegenhaltungen:
- WO-A1-2007/141312
- DE-A1-102006 050 807
- FR-A1- 2 921 414
- JP-A- 2009 243 331

## Beschreibung

### Technisches Gebiet

Die Erfindung betrifft einen Tank zur Bevorratung eines Reduktionsmittels, insbesondere eines flüssigen Reduktionsmittels, mit dem Stickstoffoxide aus dem Abgas einer Brennkraftmaschine zu Stickstoff und Wasser reduzierbar sind, wobei der Tank einen Bodenbereich und einen Kopfbereich aufweist und weiterhin in dem Tank ein Leitungsanschluss für eine Ansaugleitung und/oder eine Rücklaufleitung sowie eine Heizung eingesetzt sind, und wobei der Leitungsanschluss und die Heizung in eine im Bodenbereich angeordnete Trägerplatte integriert sind.

### Stand der Technik

Ein derartiger Tank zur Bevorratung eines Reduktionsmittels ist aus der FR 2 921 414 bekannt. Dieser Tank weist in einem Bodenbereich eine einstückig mit dem Bodenbereich ausgebildete Platine auf, die mit Seitenwänden versehen einen in den Tank integrierten Reservetank bildet. Dabei weist die Platine Leitungsanschlüsse für eine Ansaugleitung zu einem Zumessventil und eine Rücklaufleitung sowie eine Heizung auf. Von der Platine beziehungsweise einer Förderpumpe führt eine Saugleitung aus dem Reservetank heraus zu einem niedrigeren Bodenbereich des Tanks.

Die WO 2007/141312 A1 offenbart einen Tank zur Bevorratung eines Reduktionsmittels, bei dem ein durchgehender Bodenbereich des Tanks eine Halteeinrichtung für eine Trägerplatte aufweist, die eine Förderpumpe, ein Überdruckventil, einen Filter und gegebenenfalls verschiedene Sensoren umfasst. Dabei ist die Trägerplatte so in Bezug zu dem Bodenbereich angeordnet, dass zwischen diesen Bauteilen ein Kanal gebildet ist, in dem ein Flügelrad der Förderpumpe angeordnet ist.

Ein weiterer Tank zur Bevorratung eines Reduktionsmittels ist aus der DE 10 2006 050 807 A1 bekannt. Dieser Tank weist in seinem Kopfbereich eine obere von einem Deckel verschlossene Öffnung auf. Durch diesen Deckel sind eine Ansaugleitung und eine Rücklaufleitung sowie die Anschlussleitungen für eine Heizung durchgeführt und fixiert, die allesamt bis in den Bodenbereich des Tanks reichen. Alle Bauteile sind separat gefertigt und dann in den Deckel eingesetzt. Da sämtliche Bauteile den gesamten Innenraum des Tanks durchdringen, stellen sie eine erhebliche Reduzierung des Füllvolumens des Tanks dar. Weiterhin sind die freischwebend durch den Deckel in den Tank hineinreichenden Bauteile empfindlich gegen Erschütterungen, die im Alltagsbetrieb eines beispielsweise in einem Fahrzeug eingesetzten Tanks auftreten. Die Gefahr von durch Erschütterungen hervorgerufenen Beschädigungen ist erheblich.

Der Erfindung liegt die Aufgabe zu Grunde, einen Tank zur Bevorratung eines Reduktionsmittels bereitzustellen, der gegenüber dem Stand der Technik verbessert ist und insbesondere die zuvor geschilderten Nachteile nicht aufweist.

### Offenbarung der Erfindung

Diese Aufgabe wird dadurch gelöst, dass die Trägerplatte in den Tankboden eingesetzt ist, dass die Heizung als Stanzgitter ausgebildet ist, dass ein Teilbereich des Stanzgitters als Steckzunge ausgebildet ist, und dass die Heizung elektrische Anschlüsse aufweist, die durch Durchbrüche in der Trägerplatte dichtend durchgeführt sind. Dabei ist die Trägerplatte so in dem Bodenbereich angeordnet, dass der Leitungsanschluss und die elektrischen Anschlüsse für die Heizung die Trägerplatte durchdringen und außerhalb des Tanks münden. Durch diese Ausgestaltung ist ein einheitliches Modul geschaffen, dass in beliebig ausgeformte Tanks eingebaut werden kann. Insbesondere lassen sich mit einem derartigen Modul unterschiedliche kundenspezifische Tanklösungen mit verschiedenen Füllstandshöhen für das Reduktionsmittel realisieren, ohne das Änderungen an dem Leitungsanschluss für die Ansaugleitung und/oder die Rücklaufleitung oder an der Heizung erforderlich sind. Dadurch, dass die Trägerplatte im Bodenbereich des Tanks angeordnet ist, ist die Volumenreduzierung des Tankvolumens durch die in den Tank hineinragenden Bauteile minimiert. Weiterhin wird die Beschädigungsgefahr der Bauteile durch gefrierendes oder eindringendes Reduktionsmittel minimiert und ebenfalls ist die durch Erschütterungen hervorgerufene Beschädigungsgefahr der Bauteile minimiert. Ein Stanzgitter hat gegenüber den sonst verwendeten umhüllten Kabellitzen den Vorteil, dass dieses keine weiche Schutzisolation besitzt. Weiche Schutzisolationen relaxieren mit der Zeit und die Dichtheit zum Verguss bzw. zum Dichtgummi nimmt ab.

Das Einsetzen der Trägerplatte in den Tankboden ermöglicht eine maximale Tankentleerung durch den entsprechend an geodätisch tiefster Stelle angeordneten Entnahmebereich oberhalb des Leitungsanschlusses für die Ansaugleitung und/oder die Rücklaufleitung. Das Material der Trägerplatte und - soweit relevant - der einzelnen Komponenten soll folgende Voraussetzungen erfüllen:
Eine mechanische und thermische Beständigkeit gegenüber im Anwendungsfall vorhandenen Flüssigkeiten und Gasen muss über den gesamten Temperatureinsatzbereich gegeben sein,
eine ausreichende Elastizität gegenüber Eisbildung beziehungsweise über die Lebensdauer beständig gegenüber wiederholten Einfrieren und Auftauen muss gewährleistet sein,
eine lebenslange Dichtheit des Systems muss garantiert sein und
sämtliche gesetzlichen Vorgaben müssen erfüllt sein.

Diese Vorgaben werden beispielsweise von Kunststoffwerkstoffen, wie beispielsweise Thermoplaste, wie beispielsweise PE, HDPE, PE für die Trägerplatte sowie für den Tankboden und Elastomere für die Dichtung erfüllt.

Insgesamt wird durch die erfindungsgemäßen Ausgestaltungen die gestalterische Freiheit des Tankdesigns deutlich verbessert und bei gleichem Bauraum eine deutliche Vergrößerung des nutzbaren Tankvolumens erreicht. Schließlich wird die Eisdruckfestigkeit durch Eliminierung von Bauteilen im Tankinnern deutlich erhöht, da das komplette Modul eine Einheit bildet und keine Leitungen mehr im Innern des Tanks dem Eisdruck sowie korrosivem Reduktionsmittel ausgesetzt sind. Dadurch ergibt sich eine Kostenersparnis und eine größere Systemrobustheit. Die durch die erfindungsgemäße Ausgestaltung erreichte Wärmeverteilung führt zudem beim Heizen durch die Anordnung der Heizung direkt über dem Filter und dem Entnahmebereich zu schnellerem und großflächigerem Auftauen
des eingefrorenen Reduktionsmittels. Schließlich ist die Montage insgesamt mit nur wenigen Einzelteilen gegenüber der bekannten Ausgestaltung vereinfacht.

In Weiterbildung der Erfindung ist in die Trägerplatte zusätzlich ein Filter integriert, der mit dem Leitungsanschluss insbesondere für die Ansaugleitung verschaltet ist. Der Filter ist innerhalb des Tanks angeordnet und trennt einen Entnahmebereich für Reduktionsmittel oberhalb des Leitungsanschlusses von dem restlichen Innenraum des Tanks ab. Durch diesen Filter werden in dem Reduktionsmittel befindliche Verunreinigungen ausgefiltert und in dem Tank zurückgehalten.

In weiterer Ausgestaltung ist in die Trägerplatte ein Füllstandssensor integriert. Dieser Füllstandssensor, der innerhalb des Tanks angeordnet ist und wie bei der Heizung mit einem Messleitungsanschluss die Trägerplatte durchdringt, arbeitet beispielsweise nach einem Ultraschallsystem, einem kapazitiven System oder einem Druckauswertungssystem und eignet sich daher besonders für die Darstellung eines kompakten Systems.

In Weiterbildung der Erfindung ist eine Pumpe zur Förderung des Reduktionsmittels in die Trägerplatte integriert. Auch eine solche Integration trägt zur Schaffung eines kompakten Systems bei.

Gegebenenfalls ist die Trägerplatte als Stützkörper für den Filter und/oder den Füllstandssensor ausgebildet und kann direkt die Heizung, die Schnittstelle zur Befestigung am Tank und die Geometrie für die verschiedenen Anschlüsse enthalten.

In weiterer Ausgestaltung ist die Trägerplatte mit einer beheizbaren Druckausgleichsleitung verbunden. Diese den Bodenbereich mit dem Kopfbereich verbindende Druckausgleichsleitung stellt sicher, dass bei einer Entnahme von einem
durch die Heizung aufgetauten Reduktionsmittel der sich in dem entsprechenden Bodenbereich (insbesondere oberhalb des Entnahmebereichs) bildende Hohlraum mit Luft aufgefüllt wird. Dazu kann im Kopfbereich des Tanks beziehungsweise der Tankwandung ein mit der Druckausgleichsleitung und der Umgebung des Tanks zusammenwirkendes Druckausgleichsventil vorhanden sein.

Das Fördermodul für das Reduktionsmittel kann kostenreduzierend unabhängig von der Tankgeometrie am Fahrzeug beziehungsweise an der Arbeitsmaschine, an der Trägerplatte oder an dem Tank montiert werden beziehungsweise in das Modul integriert sein.

Ein Stanzgitter kann ohne weiche beziehungsweise alterungsanfällige Materialien direkt mittels einer Dichtmasse verpresst oder mittels Vergussmassen abgedichtet werden. Dabei ist ein kompletter Verguss des Stanzgitters mit der Trägerplatte - selbstverständlich so, dass der eventuell (teilweise) darunterliegende Entnahmebereich frei bleibt - im Rahmen der Erfindung möglich. Zudem ist ein Stanzgitter kostengünstiger als umhüllte Kabellitze herzustellen. Zusätzlich entfällt die Sicherung der Kabellitzen über Kapillarsperren. Durch die weiterhin
vorgesehene Ausbildung eines Teilbereichs des Stanzgitters als Steckzunge entfällt die sonst nötige Verbindung der Kabellitze mit einer solchen Verbindungseinrichtung und es wird ein zusätzlicher Formschluss erreicht.

Weitere vorteilhafte Ausgestaltungen der Erfindung sind der Zeichnungsbeschreibung zu entnehmen, in der in den Figuren dargestellte Ausführungsbeispiele näher beschrieben sind. Es zeigen:

### Kurzbeschreibung der Zeichnungen

Weitere vorteilhafte Ausgestaltungen der Erfindung sind der Zeichnungsbeschreibung zu entnehmen, in der in den Figuren dargestellte Ausführungsbeispiele näher beschrieben sind. Es zeigen:
- Figur 1: einen Schnitt durch einen teilweise dargestellten Tank mit der eingesetzten und erfindungsgemäß ausgestalteten Trägerplatte,
- Figur 2: eine perspektivische Ansicht der Trägerplatte von der Tankinnenseite aus,
- Figur 3: eine perspektivische Ansicht der Trägerplatte von der Tankaußenseite aus, und
- Figur 4: eine Ansicht entsprechend Figur 1, bei der die Heizung in verschiedenen Varianten aus einem Stanzgitter hergestellt ist.

### Ausführungsform der Erfindung

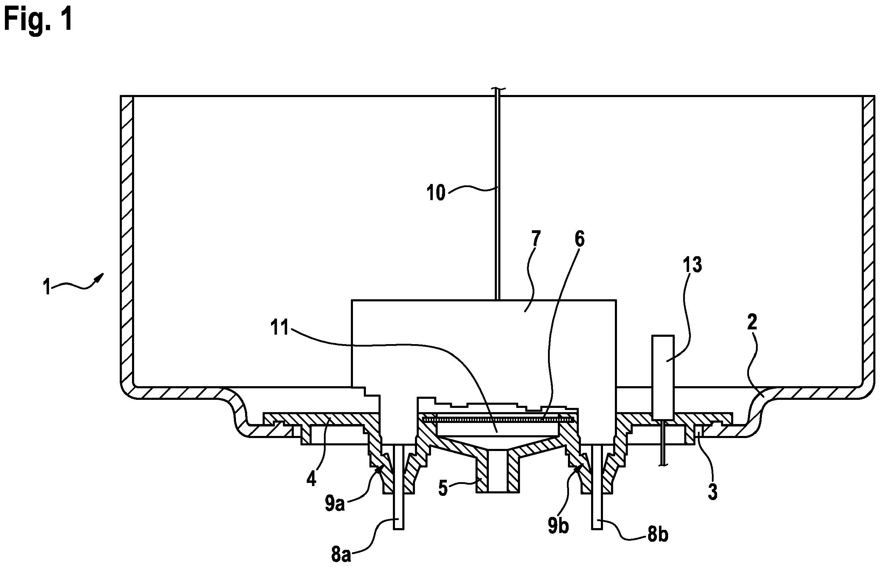

In dem in Figur 1 ausschnittsweise dargestellten Tank 1 wird ein Reduktionsmittel gelagert, das die in dem Abgas einer Brennkraftmaschine enthaltenden Stickstoffoxide zu Stickstoff und Wasser reduziert. Dazu wird das Reduktionsmittel aus dem Tank über ein nicht dargestelltes Fördermodul dosiert in die Abgasleitung der Brennkraftmaschine eingespritzt.

Der Tank 1 weist in einem Bodenbereich 2 eine geometrisch beliebige, vorzugsweise kreisförmige Öffnung 3 auf, die von einer Trägerplatte 4 dicht verschlossen ist. Dazu ist die Trägerplatte 4 gegebenenfalls unter Einfügung einer Dichtung mit dem Tank 1 beispielsweise verschraubt. Die Trägerplatte 4 weist einen Leitungsanschluss 5 für eine Ansaugleitung und/oder eine Rücklaufleitung auf, wobei der Leitungsanschluss 5 insbesondere, wenn der Leitungsanschluss 5 mit einer Ansaugleitung verschaltet ist, mit einem Filter 6 in Form eines Filtersiebes verschaltet ist. Der Leitungsanschluss 5 ist gemäß dem Ausführungsbeispiel bevorzugt als Einzelanschluss für die Ansaugleitung ausgebildet. Der Leitungsanschluss 5 kann aber auch als Doppelanschluss sowohl für die Ansaugleitung und die Rücklaufleitung ausgebildet sein. Schließlich kann aber auch ein weiterer Leitungsanschluss 5 für die Rücklaufleitung in die Trägerplatte 4 vorzugsweise außerhalb des von dem Filter 6 abgedeckten Bereichs eingelassen sein.

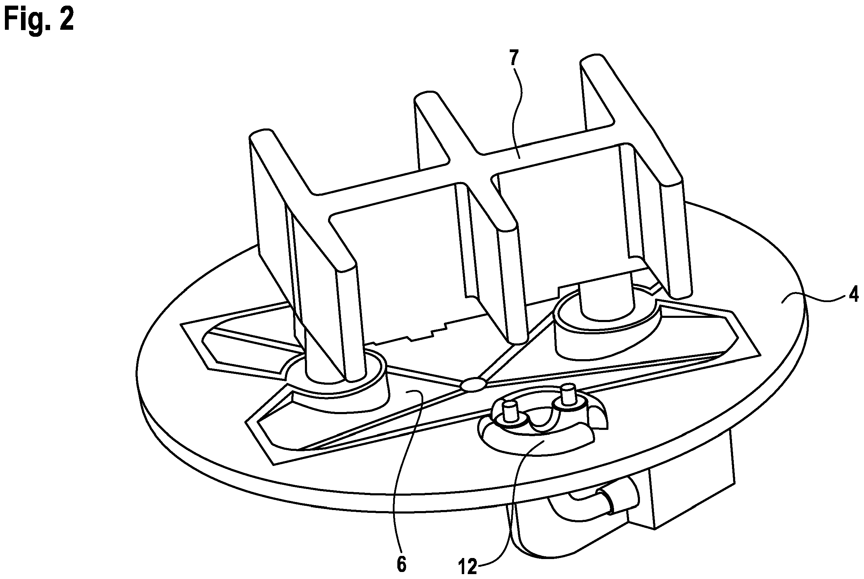

Das in dem Tank 1 bevorratete Reduktionsmittel gelangt durch Freiräume unterhalb und seitlich einer Heizung 7, die zumindest teilweise den Filter 6 überdeckt (Figur 2), zu dem Filter 6 und durch diesen in einen unter dem Filter 6 angeordneten und mit dem Leitungsanschluss 5 verbundenen Entnahmebereich 11. Wie in der Figur 2 dargestellt ist, kann in die Trägerplatte 4 eine entsprechende Vertiefung eingelassen sein, in die der Filter 6 flächig eingesetzt ist. Für eine Wartung ist die Heizung 7 demontierbar und der Filter 6 austauschbar. Selbstverständlich kann das System auch auf Lebensdauer ausgelegt sein und dementsprechend können die Bauteile nicht demontierbar ausgeführt sein.

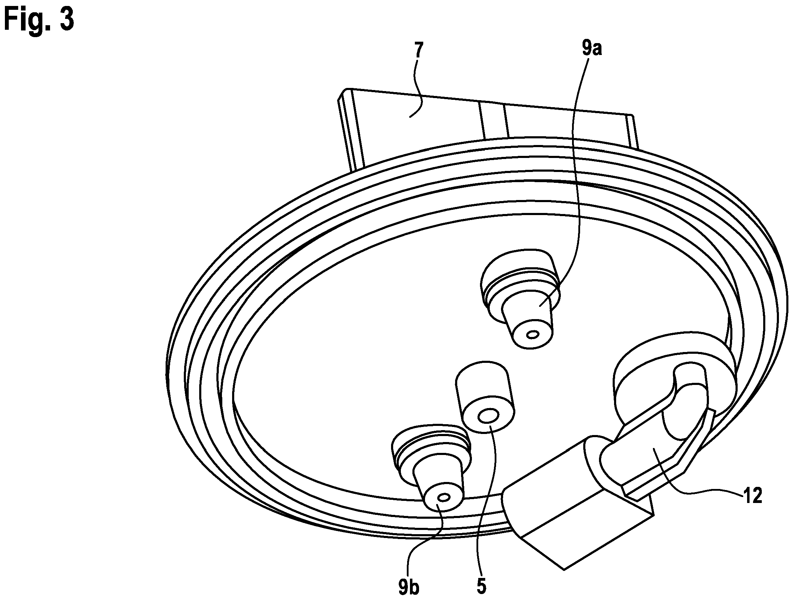

Die Heizung 7 weist zwei elektrische Anschlüsse 8a, 8b auf, die durch entsprechende Durchbrüche 9a, 9b (Figur 3) in der Trägerplatte 4 dichtend hindurchgeführt sind. Die Heizung 7 ist weiterhin mit einer schematisch dargestellten beheizbaren Druckausgleichsleitung 10 verschaltet, die bis zu einem Kopfbereich des Tanks 1 geführt ist. Die Druckausgleichsleitung 10 ist beispielsweise ein mittels einer Heizlitze beheizbarer Schlauch, der den Kopfbereich des Tanks 1 mit den unter der Heizung 7 gebildeten Freiräumen und dem Entnahmebereich 11 verbindet. Grundsätzlich reicht aber jede einen Luftkanal bildende Geometrie.

Im Bereich außerhalb der von dem Filter 6 abgedeckten Grundfläche weist die Trägerplatte 4 einen Anschluss 12 für einen Füllstandssensor 13 auf. Der Füllstandssensor 13 arbeitet beispielsweise nach einem Ultraschallsystem, einem kapazitivem System oder einem Druckauswertungssystem. Der Füllstandssensor 13 wird in den Anschluss 12 dichtend eingesteckt, direkt mit umspritzt, eingeklebt, eingeharzt oder eingeschweißt und die elektrischen Leitungen werden durch den Anschluss 12 nach außen durch die Trägerplatte 4 hindurchgeführt. Alle elektrischen und fluidtechnischen Leitungsanschlüsse sind im Bereich der Trägerplatte 4 aus den Tankinneren herausgeführt und stellen demzufolge beispielsweise keine Beeinträchtigung des Füllvolumens des Tanks 1 dar. Insbesondere sind die Leitungen keiner Korrosion durch das Reduktionsmittel ausgesetzt.

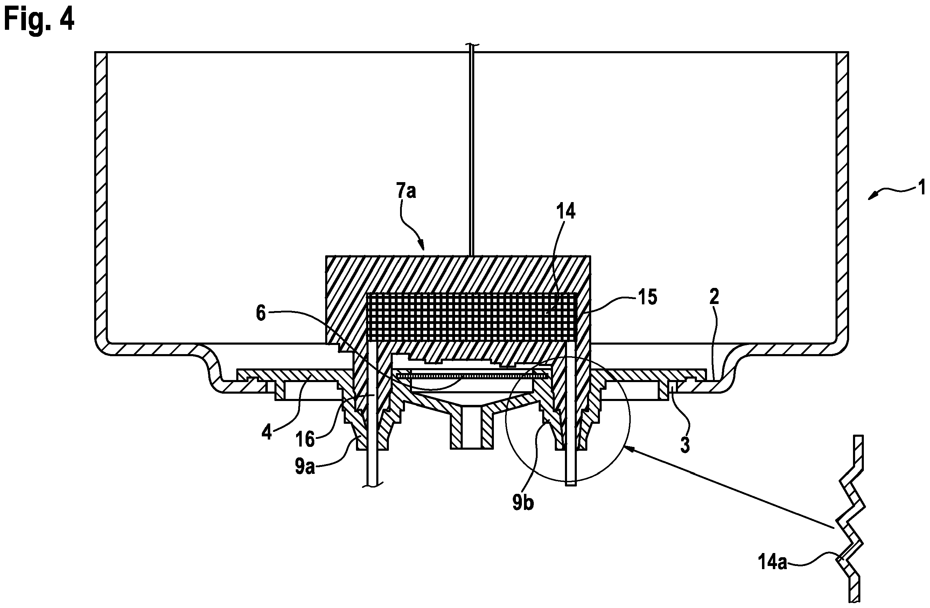

In dem Ausführungsbeispiel gemäß Figur 4 ist die Heizung 7a durch ein Stanzgitter 14 gebildet, das von einer Vergussmasse 15 umhüllt ist. Im linken Teil der Figur 4 ist das Stanzgitter 14 mit einer separaten Leitung 16 verbunden, die den Anschluss 8a bildend, durch den Durchbruch 9a geführt ist. Auf der rechten Seite der Figur 4 bildet ein Teilbereich des Stanzgitters 14a (siehe Ausschnittsvergrößerung) direkt den Anschluss 8b, der durch den Durchbruch 9b geführt ist. Insbesondere bei dieser Ausführungsform kann die Vergussmasse 15 den Teilbereich 14a des Stanzgitters 14 vollständig umhüllend bis durch den Durchbruch 9b geführt sein.

## Patentansprüche

1. Tank zur Bevorratung eines Reduktionsmittels, insbesondere eines flüssigen Reduktionsmittels, mit dem Stickstoffoxide aus dem Abgas einer Brennkraftmaschine zu Stickstoff und Wasser reduzierbar sind, wobei der Tank (1) einen Bodenbereich (2) und einen Kopfbereich aufweist, wobei in den Tank (1) ein Leitungsanschluss (5) für eine Ansaugleitung und eine Rücklaufleitung sowie eine Heizung (7, 7a) eingesetzt sind, und wobei der Leitungsanschluss (5) und die Heizung (7, 7a) in eine im Bodenbereich (2) angeordnete Trägerplatte (4) integriert sind, die in den Tankboden eingesetzt ist,
**dadurch gekennzeichnet, dass** die Heizung (7, 7a) als Stanzgitter (14) ausgebildet ist und elektrische Anschlüsse (8a, 8b) aufweist, die durch Durchbrüche (9a, 9b) in der Trägerplatte (4) dichtend durchgeführt sind, wobei ein Teilbereich des Stanzgitters (14) als Steckzunge (14a) ausgebildet ist.

2. Tank nach Anspruch 1,
**dadurch gekennzeichnet, dass** in die Trägerplatte (4) ein mit dem Leitungsanschluss verschalteter Filter (6) integriert ist.

3. Tank nach einem der vorherigen Ansprüche,
**dadurch gekennzeichnet, dass** in die Trägerplatte (4) ein Füllstandssensor (13) integriert ist.

4. Tank nach einem der vorherigen Ansprüche,
**dadurch gekennzeichnet, dass** die Trägerplatte (4) mit einer beheizbaren Druckausgleichsleitung (10) verbunden ist.

5. Tank nach einem der vorherigen Ansprüche,
**dadurch gekennzeichnet, dass** eine Pumpe zur Förderung des Reduktionsmittels in die Trägerplatte (4) integriert ist.

6. Tank nach einem der vorherigen Ansprüche,
**dadurch gekennzeichnet, dass** das Stanzgitter (14) von einer von Vergussmasse (15) umhüllt ist.

7. Tank nach Anspruch 6,
**dadurch gekennzeichnet, dass** die Vergussmasse (15) mit der Trägerplatte (4) vergossen ist.

## Claims

1. Tank for storing a reducing agent, in particular a liquid reducing agent, by means of which nitrogen oxides from the exhaust gas of an internal combustion engine can be reduced to nitrogen and water, wherein the tank (1) has a base region (2) and a top region, wherein a line connector (5) for a suction line and a return line, and a heater (7, 7a), are inserted into the tank (1), and wherein the line connector (5) and the heater (7, 7a) are integrated into a carrier plate (4) which is arranged in the base region (2) and which is inserted into the tank base,
**characterized in that** the heater (7, 7a) is formed as a lead frame (14) and has electrical connectors (8a, 8b) which are led sealingly through apertures (9a, 9b) in the carrier plate (4), wherein a partial region of the lead frame (14) is formed as a plug-in tongue (14a).

2. Tank according to Claim 1,
**characterized in that** a filter (6) which is interconnected with the line connector is integrated into the carrier plate (4).

3. Tank according to one of the preceding claims,
**characterized in that** a fill level sensor (13) is integrated into the carrier plate (4).

4. Tank according to one of the preceding claims,
**characterized in that** the carrier plate (4) is connected to a heatable pressure compensation line (10) .

5. Tank according to one of the preceding claims,
**characterized in that** a pump for conveying the reducing agent is integrated into the carrier plate (4).

6. Tank according to one of the preceding claims, **characterized in that** the lead frame (14) is encased by a casting compound (15).

7. Tank according to Claim 6,
**characterized in that** the casting compound (15) is cast with the carrier plate (4).

## Revendications

1. Réservoir servant à conserver un agent de réduction, en particulier un agent liquide de réduction par lequel les oxydes d'azote des gaz d'échappement d'un moteur à combustion interne peuvent être réduits en azote et en eau,
le réservoir (1) présentant une partie de fond (2) et une partie de tête,
un raccord (5) pour un conduit d'aspiration et un conduit de renvoi ainsi qu'un chauffage (7, 7a) étant introduits dans le réservoir (1),
le raccord (5) de conduit et le chauffage (7, 7a) étant intégrés dans une plaque de support (4) disposée dans la partie de fond (2) et placée dans le fond du réservoir,
**caractérisé en ce que**
le chauffage (7, 7a) est configuré comme grille estampée (14) et présente des raccordements électriques (8a, 8b) qui traversent de manière étanche des perforations (9a, 9b) ménagées dans la plaque de support (4), une partie de la grille estampée (14) étant configurée comme languette enfichable (14a).

2. Réservoir selon la revendication 1, **caractérisé en ce qu'**un filtre (6) raccordé au raccordement de conduit est intégré dans la plaque de support (4).

3. Réservoir selon l'une des revendications précédentes, **caractérisé en ce qu'**un capteur de niveau (13) est intégré dans la plaque de support (4).

4. Réservoir selon l'une des revendications précédentes, **caractérisé en ce que** la plaque de support (4) est reliée à un conduit (10) d'équilibrage de pression.

5. Réservoir selon l'une des revendications précédentes, **caractérisé en ce qu'**une pompe de transport de l'agent de réduction est intégrée dans la plaque de support (4).

6. Réservoir selon l'une des revendications précédentes, **caractérisé en ce que** la grille estampée (14) est englobée dans une pâte d'encapsulation (15).

7. Réservoir selon la revendication 6, **caractérisé en ce que** la pâte d'encapsulation (15) englobe la plaque de support (4).
